# EUROPÄISCHE PATENTANMELDUNG

(11) **EP 1 170 935 A2**
(43) Veröffentlichungstag der Anmeldung: **09.01.2002**
(21) Anmeldenummer: 01113930.0
(22) Anmeldetag: 07.06.2001
(51) Int. Cl.: H04M 3/533

(54) **Vorrichtung und Verfahren zum Verarbeiten von Sprachmeldungen**

(30) Priorität: 06.07.2000 DE 10032828
(71) Anmelder: SIEMENS AKTIENGESELLSCHAFT, 80333 München (DE)
(72) Erfinder: Hauschild, Hans-Jürgen, 33100 Paderborn (DE); Hinz, Bernd, 33378 Rheda-Wiedenbrück (DE)

(57) **Zusammenfassung**

Die vorliegende Erfindung betrifft eine Sprachverarbeitungsvorrichtung (1) zum Verarbeiten von Sprachmeldungen aus einem Sprachmeldungssystem (2) mit einer Empfangsvorrichtung (3) zum sequentiellen Empfangen der Sprachmeldungen, einer Speichervorrichtung (4) zum separaten Abspeichern der einzelnen Sprachmeldungen, und einer Abspielvorrichtung (5) zum wahlfreien Abspielen der abgespeicherten Sprachmeldungen.

Weiterhin betrifft die vorliegende Erfindung ein in dieser Sprachverarbeitungsvorrichtung (1) angewendetes Verfahren zum Verarbeiten von Sprachmeldungen.

## Beschreibung

Die vorliegende Erfindung betrifft eine Sprachverarbeitungsvorrichtung zum Verarbeiten von Sprachmeldungen aus einem Sprachspeichersystem und ein Verfahren zum Verarbeiten von Sprachmeldungen aus einem Sprachspeichersystem.

Sprachspeichersysteme - in der Literatur häufig auch als Voicemail-Systeme bezeichnet - sind Systeme, die im wesentlichen die Funktionalität eines Anrufbeantworters zum Aufzeichnen von Sprachmeldungen zur Verfügung stellen. Im Unterschied zu herkömmlichen Anrufbeantwortern sind derartige Voicemail-Systeme nicht lokal, d.h. direkt an ein Endgerät angeschlossen, sondern zentral in einem Telekommunikationssystem, z.B. in einer Telekommunikationsanlage in einem privaten Telekommunikationsnetz oder in einer Vermittlungsstelle in einem öffentlichen Telekommunikationsnetz, vorhanden.

Aus der "Produktschrift "HICOM 300 'Voice Mail Service VMS'": Siemens AG, 1995, Bestell-Nr.: A31002-S10-A1-7-5," ist beispielsweise ein derartiges Sprachspeichersystem 'Voice Mail Service VMS' bekannt, welches in ein privates ISDN-Vermittlungssystem integriert ist. Dieses Sprachspeichersystem dient zum Speichern, Abrufen und Verteilen von Nachrichten in natürlicher Sprache. Den im Sprachspeichersystem eingetragenen Benutzern ist hierfür ein persönliches Postfach ("Sprachbriefkasten") zugeteilt. Postfachinhaber können bei ihrer Abwesenheit die für sie bestimmten Anrufe zu Ihrem Postfach umleiten, in dem daraufhin die mit den Anrufen übermittelten Nachrichten gespeichert werden.

Durch Anwählen seines Postfaches kann der eingetragene Benutzer jederzeit und ortsunabhängig die gespeicherten Nachrichten beispielsweise mittels eines Telefonapparates abhören. Eine akustische Bedienerführung erleichtert den Umgang mit dem Sprachspeichersystem. Die Bedienung eines solchen Sprachspeichersystems basiert in der Regel auf folgenden Schritten:
- Anwahl des Sprachspeichersystems z.B. über ein Telefonapparat
- Anhören eines gesprochenen Menüs, z.B.
   "Drücken Sie bitte die Ziffer 3, um eine Voicemail abzuhören"
   "Drücken Sie bitte die Ziffer 6, um die Voicemail zu löschen"
- Ausführen der gewünschten Funktion per Tastendruck
- Sprachspeichersystem durch Auflegen des Telefonhörers verlassen.

Die Bedienung des Sprachspeichersystems erfolgt dabei in der Regel über die Tastatur des Telefonapparates z.B. mit Hilfe von über den Tastwahlblock eines Endgeräts aktivierbaren Frequenztönen nach dem Mehrfrequenzwahlverfahren (MFV).

Der Nachteil dieser Lösung besteht darin, daß ein Teilnehmer einerseits keine Übersicht über die Gesamtheit seiner empfangenen Sprachmeldungen (Voicemails) erhält. Außerdem können die Sprachmeldungen nur sequentiell - d.h. der Reihe nach - abgehört werden. Ein wahlfreier Zugriff auf die Sprachmeldungen ist nicht möglich.

Weiterhin ist die Bedienung sehr aufwendig und langwierig, da erst ein gesprochenes Menü abgehört werden muß und erst anschließend eine gewünschte Funktion per Tastendruck ausgeführt werden kann. Auch ist eine Weiterverarbeitung der Sprachmeldungen nicht möglich (die Sprachmeldungen können lediglich abgehört, gespeichert oder gelöscht werden).

Der vorliegenden Erfindung liegt daher die Aufgabe zugrunde, eine Sprachverarbeitungsvorrichtung zum Verarbeiten von Sprachmeldungen aus einem Sprachspeichersystem und ein Verfahren zum Verarbeiten von Sprachmeldungen aus einem Sprachspeichersystem bereitzustellen, bei denen ein wahlfreier Zugriff auf empfangene Sprachmeldungen ermöglicht wird.

Diese Aufgabe wird durch eine Sprachverarbeitungsvorrichtung gemäß dem beigefügten Anspruch 1 und ein Verfahren zum Verarbeiten von Sprachmeldungen gemäß dem beigefügten Anspruch 7 gelöst.

Gemäß der vorliegenden Erfindung werden im Sprachspeichersystem gespeicherte Sprachmeldungen durch die Sprachverarbeitungsvorrichtung sequentiell angefordert und empfangen und jede einzelne Sprachmeldung separat abgespeichert. Der Zugriff auf die in der Sprachverarbeitungsvorrichtung gespeicherten Sprachmeldungen kann daraufhin durch einen Benutzer wahlfrei - d.h. in beliebiger Reihenfolge - erfolgen.

Vorteilhafte Ausgestaltungen der vorliegenden Erfindung sind in den jeweiligen Unteransprüchen wiedergegeben.

Die zur Ansteuerung des Sprachspeichersystems erforderlichen Signale, beispielsweise zur Signalisierung gemäß dem MFV-Verfahren, werden durch eine der Sprachverarbeitungsvorrichtung zugeordnete Sendevorrichtung automatisch generiert und an das Sprachspeichersystem gesendet. Auf diese Weise kann der Benutzer der erfindungsgemäßen Sprachverarbeitungsvorrichtung seine Sprachmeldungen durch eine einfache Eingabe - z.B. einen Tastendruck oder einen Mausklick - vom Sprachspeichersystem abrufen.

Vorteilhafterweise ist die erfindungsgemäße Sprachverarbeitungsvorrichtung in einem mit entsprechender Hard- und Software ausgestatteten Personal Computer - kurz PC - realisiert. Zur einfachen Steuerung der erfindungsgemäßen Sprachverarbeitungsvorrichtung durch einen Benutzer eignet sich dabei eine graphische Benutzeroberfläche, über die mittels Eingabe durch eine Eingabevorrichtung - wie z.B. einer Maus oder einer Tastatur - die einzelnen Aktionen, z.B. Abholen aller Sprachmeldungen aus dem Sprachspeichersystem, durchgeführt werden können.

In einer Ausgestaltung der vorliegenden Erfindung wird jede abgeholte Sprachmeldung in je einer Datei, z.B. im Wave-Format, aufgezeichnet und als Anhang an eine elektronische Post-Mitteilung - in der Literatur als E-Mail bezeichnet - an das E-Mail-Programm des Benutzers gesendet. Der Benutzer bekommt somit eine Übersicht aller empfangenen Sprachmeldungen im Eingangskorb seines E-Mail-Programmes und hat anschließend die Möglichkeit, wahlfrei eine E-Mail zu öffnen und die Sprachmeldung in Form der Datei abzuspielen.

Durch die Abspeicherung der Sprachmeldungen in jeweils einer Datei in einem bestimmten Dateiformat ergibt sich weiterhin die Möglichkeit, die Sprachmeldungen anschließend, z.B. durch Konvertierung der Sprache in Text mittels eines Spracherkennungssystem, weiterzuverarbeiten. Außerdem können die einzelnen Sprachmeldungen bzw. Dateien auf komfortable Weise an andere Teilnehmer weiterversendet werden.

Nach dem Empfangen der in dem Sprachspeichersystem enthaltenen Sprachmeldungen werden die Sprachmeldungen im Sprachspeichersystem durch eine der Sprachverarbeitungsvorrichtung zugeordnete Löschvorrichtung automatisch gelöscht. Die Löschvorrichtung sendet dabei entsprechende Signale an das Sprachspeichersystem.

Die vorliegende Erfindung wird nachfolgend anhand eines bevorzugten Ausführungsbeispiels unter Bezug auf die beigefügte Zeichnung näher erläutert.

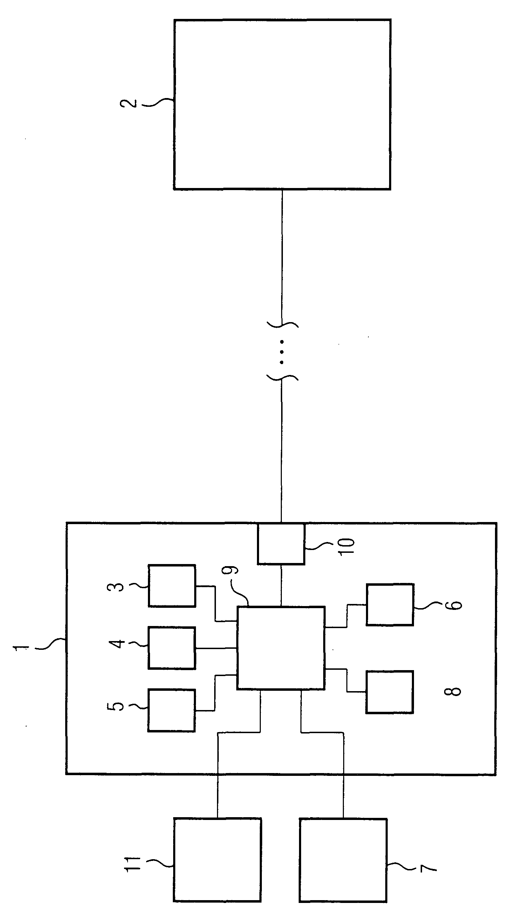

Die Fig. 1 zeigt dabei eine schematische Darstellung der erfindungsgemäßen Sprachverarbeitungsvorrichtung.

Die erfindungsgemäße Sprachverarbeitungsvorrichtung 1 ist dabei vorteilhafterweise in einem herkömmlichen Personal Computer integriert, der eine Schnittstelle 10 zu einem Telekommunikationsnetz aufweist. Die Sprachverarbeitungsvorrichtung 1 umfaßt eine Empfangsvorrichtung 3 zum Empfangen der Sprachmeldungen vom Sprachspeichersystem 2, eine Speichervorrichtung 4 (z.B. eine Festplatte) zum separaten Abspeichern der einzelnen vom Sprachspeichersystem 2 empfangenen Sprachmeldungen und eine Abspielvorrichtung 5 zum wahlfreien Abspielen der einzelnen in der Speichervorrichtung 4 abgespeicherten Sprachmeldungen.

Weiterhin ist in der erfindungsgemäßen Sprachverarbeitungsvorrichtung 1 eine Sendevorrichtung 6 zum automatischen Generieren und Übermitteln von zur Ansteuerung des Sprachspeichersystems 2 erforderlichen Signalen und eine Löschvorrichtung 8 zur Generierung von Signalen zum automatischen Löschen der empfangenen Sprachmeldungen im Sprachspeichersystem 2 integriert. Die Signale werden dabei beispielsweise auf Basis des Mehrfrequenzwahlverfahrens (MFV) generiert.

Die Benutzereingaben erfolgen über eine an die Sprachverarbeitungsvorrichtung 1 angeschlossene Eingabevorrichtung 7 - beispielsweise eine Tastatur oder eine Maus - mittels einer graphische Benutzeroberfläche (GUI, graphic user interface), die auf einem an der Sprachverarbeitungsvorrichtung 1 angeschlossenen Bildschirm 11 dargestellt wird.

Die Steuerung der Ein- und Ausgaben, der vorrichtungs-internen Schnittstellen und der einzelnen Vorrichtungen bzw. Funktionseinheiten der Sprachverarbeitungsvorrichtung 1 erfolgt dabei durch einen zentralen Prozessor 9 (CPU, central processing unit).

Die Funktionsweise der erfindungsgemäßen Sprachverarbeitungsvorrichtung 1 wird nachfolgend anhand eines Beispieles erläutert, wobei eine Mehrzahl von Sprachmeldungen für einen Benutzer bzw. Teilnehmer in dem Sprachspeichersystem 2 hinterlegt sind.

Der Benutzer kann mittels der Eingabevorrichtung 7 über ein Bedienelement der graphischen Benutzeroberfläche veranlassen, daß alle Sprachmeldungen automatisch vom Sprachspeichersystem 2 abgerufen und an die Sprachverarbeitungsvorrichtung 1 übermittelt werden.

Dabei wird eine Verbindung mit dem Sprachspeichersystem 2 über die Schnittstelle 10 hergestellt. Die Verbindung kann dabei über ein - privates oder öffentliches - Telekommunikationsnetz aber auch über ein Rechnernetz - beispielsweise ein LAN (Local Area Network) oder das Internet - eingerichtet werden.

Die Sendevorrichtung 6 generiert und versendet danach die zum Abrufen der in dem Sprachspeichersystem 2 enthaltenen Sprachmeldungen benötigten Signale, wie z.B. die Signale für die Menüfunktionen und ggf. erforderliche Signale für die Eingabe einer PIN-Nummer. Diese Signale entsprechen dabei beispielsweise der Tastatureingabe über das Telefon gemäß dem Mehrfrequenzwahlverfahren (MFV).

Gemäß der vorliegenden Erfindung wird somit eine Benutzeraktion, die über ein Bedienelement der graphischen Benutzeroberfläche veranlaßt wurde, automatisch in Signale umgewandelt, die zum Aufbau der Verbindung, zum Abholen der Sprachmeldungen und zum Abbau der Verbindung zwischen der Sprachverarbeitungsvorrichtung 1 und dem Sprachspeichersystem 2 notwendig sind.

Nach dem Anfordern und Empfangen der Sprachmeldungen vom Sprachspeichersystem 2 durch die Empfangsvorrichtung 3 und dem separaten Abspeichern der einzelnen Sprachmeldungen in der Speichervorrichtung 4 werden durch die Löschvorrichtung 8 die zum Löschen der Sprachmeldungen in dem Sprachspeichersystem 2 notwendigen Signale generiert und an das Sprachspeichersystem 2 versendet.

In einer Ausgestaltung der vorliegenden Erfindung werden die einzelnen Sprachmeldungen jeweils als E-Mail mit der Sprachmeldung als Anhang, z.B. einer Datei im sogenannten Wave-Format, an ein dem Benutzer zugeordnetes E-Mail-Programm in der erfindungsgemäßen Sprachverarbeitungsvorrichtung 1 gesendet. Die einzelnen Sprachmeldungen stehen nun dem Benutzer jeweils als E-Mail-Anhang im Eingangskorb seines E-Mail-Programmes zur Verfügung. Der Benutzer hat nun die Möglichkeit, z.B. per Mausklick wahlfrei eine E-Mail zu öffnen, und sich den Anhang bzw. die Sprachmeldung durch eine Abspielvorrichtung (z.B. das E-Mail-Programm) abspielen zu lassen.

Gemäß der vorliegenden Erfindung erfolgt somit die Steuerung eines herkömmlichen Voicemail-Systems über eine komfortable graphische Benutzeroberfläche.

## Patentansprüche

1. Sprachverarbeitungsvorrichtung (1) zum Verarbeiten von in einem Sprachspeichersystem (2) gespeicherten Sprachmeldungen, wobei das Sprachmeldungssystem (2) über bestimmte Signale durch die Sprachverarbeitungsvorrichtung (1) ansteuerbar ist, mit einer Empfangsvorrichtung (3) zum sequentiellen Empfangen der in dem Sprachspeichersystem (2) gespeicherten Sprachmeldungen,
mit einer Speichervorrichtung (4) zum seperaten Abspeichern der einzelnen Sprachmeldungen, und
mit einer Abspielvorrichtung (5) zum wahlfreien Abspielen der einzelnen abgespeicherten Sprachmeldungen.

2. Sprachverarbeitungsvorrichtung (1) gemäß Anspruch 1,
**gekennzeichnet durch**
eine Sendevorrichtung (6) zum automatischen Generieren und Versenden von zur Ansteuerung des Sprachspeichersystems (2) erforderlichen Signale.

3. Sprachverarbeitungsvorrichtung (1) gemäß Anspruch 1 oder 2,
**dadurch gekennzeichnet,**
**daß** die Signale gemäß dem Mehrfrequenzwahlverfahren MFV ausgestaltet sind.

4. Sprachverarbeitungsvorrichtung (1) gemäß Anspruch 1, 2 oder 3,
**gekennzeichnet durch**
eine an einer Anzeigevorrichtung (11) der Sprachverarbeitungsvorrichtung (1) dargestellten grafische Benutzeroberfläche zum Steuern der Sprachverarbeitungsvorrichtung (1).

5. Sprachverarbeitungsvorrichtung (1) gemäß einem der Ansprüche 1 bis 4,
**dadurch gekennzeichnet,**
**daß** die abgespeicherten Sprachmeldungen einem Beutzer jeweils als Anhang einer E-Mail zur Verfügung gestellt werden.

6. Sprachverarbeitungsvorrichtung (1) gemäß einem der Ansprüche 1 bis 5,
**gekennzeichnet durch**
eine Löschvorrichtung (8) zum automatischen Löschen der empfangenen Sprachmeldungen im Sprachspeichersystem (2).

7. Verfahren zum Verarbeiten von Sprachmeldungen aus einem Sprachspeichersystem (2), wobei das Sprachspeichersystem (2) über bestimmte Signale ansteuerbar ist, mit den Schritten sequentielles Empfangen der in dem Sprachspeichersystem (2) enthaltenen Sprachmeldungen,
seperates Abspeichern der einzelnen Sprachmeldungen, und wahlfreies Abspielen der einzelnen abgespeicherten Sprachmeldungen.

8. Verfahren gemäß Anspruch 7,
**gekennzeichnet durch**
das automatische Generieren und Versenden der zur Ansteuerung des Sprachspeichersystems (2) erforderlichen Signale.

9. Verfahren gemäß Anspruch 7 oder 8,
**dadurch gekennzeichnet,**
**daß** die abgespeicherten Sprachmeldungen einem Beutzer jeweils als Anhang einer E-Mail zur Verfügung gestellt werden.

10. Verfahren gemäß Anspruch 7, 8 oder 9,
**dadurch gekennzeichnet,**
**daß** die Sprachmeldungen nach dem Empfangen im Sprachspeichersystem (2) automatisch gelöscht werden.
